Europäisches Patentamt

(19) European Patent Office

Office européen des brevets

(11) Numéro de publication: **0 239 441**
**B1**

(12) **FASCICULE DE BREVET EUROPEEN**

(45) Date de publication du fascicule du brevet:
06.06.90

(21) Numéro de dépôt: **87400390.8**

(22) Date de dépôt: **23.02.87**

(51) Int. Cl.⁵: **G21C 3/34**

(54) Grille pour assemblage combustible nucléaire, et assemblage combustible nucléaire comportant au moins une telle grille.

(30) Priorité: **24.02.86 FR 8602501**

(43) Date de publication de la demande:
**30.09.87 Bulletin 87/40**

(45) Mention de la délivrance du brevet:
**06.06.90 Bulletin 90/23**

(84) Etats contractants désignés:
**AT BE CH DE ES GB IT LI NL SE**

(56) Documents cités:
**EP-A- 0 065 613**
**DE-A- 1 439 362**
**FR-A- 2 145 676**
**GB-A- 1 133 177**
**US-A- 4 135 972**

(73) Titulaire: **FRAMATOME, Tour Fiat 1, Place de la Coupole, F-92400 Courbevoie(FR)**
Titulaire: **COMPAGNIE GENERALE DES MATIERES NUCLEAIRES (COGEMA), 2, rue Paul Dautier B.P. 4, F-78141 Velizy-Villacoublay(FR)**

(72) Inventeur: **Noailly, Jean, 18, rue de Tourvieille, F-69005 Lyon(FR)**
Inventeur: **Denizou, Jean-Pierre, 15,Hameau des Amandines, F-69290 Craponne(FR)**

(74) Mandataire: **Fort, Jacques et al, CABINET PLASSERAUD 84, rue d'Amsterdam, F-75009 Paris(FR)**

## Description

L'invention concerne de façon générale les assemblages de combustible pour réacteur nucléaire du type incorporant un faisceau de crayons de combustible disposés aux noeuds d'un réseau régulier, le long desquels sont réparties de place en place des grilles. L'invention concerne plus particulièrement les grilles destinées à de tels assemblages, comportant au moins deux séries de plaques parallèles délimitant des alvéoles de passage des crayons de combustible et éventuellement d'éléments substitués à eux en certains points du réseau.

Bien que l'invention soit de portée générale, elle trouve un intérêt tout particulier dans les assemblages de combustible dont les crayons sont disposés suivant un réseau triangulaire dont le pas est serré, c'est-à-dire peu supérieur au diamètre des crayons. L'emploi d'un tel réseau triangulaire est souhaitable lorsqu'on cherche à constituer un coeur de réacteur sous-modéré, qui impose que les lames de réfrigérant entre les crayons soient faibles, tout en permettant le passage du débit de réfrigérant requis et un bon mélange des filets de réfrigérant, sans pour autant apporter une perte de charge excessive.

Les grilles des assemblages de combustible nucléaire destinés aux réacteurs modérés et refroidis à l'eau sont en règle générale prévues pour retenir les crayons aux noeuds d'un réseau carré. Ces grilles comprennent une ceinture et deux jeux de plaquettes orthogonales. On a également proposé (US-A-3 068 163) un assemblage de combustible comportant des grilles destinées à maintenir les crayons aux noeuds d'un réseau carré ou rectangulaire, grilles constituées par une bande sans fin droite ou ondulée, passant entre les crayons, avec assemblage à mi-fer aux points de croisement. Cette solution, si on tente de l'appliquer à l'assemblage à pas "serré", ne permet pas d'assurer le passage du réfrigérant dans des conditions satisfaisantes, le mélange des différents filets et une perte de charge acceptable.

L'invention vise à fournir une grille pour assemblage de combustible nucléaire susceptible de s'adapter aussi bien au maintien en place efficace des crayons qu'à un bon mélange des filets fluides, et ceci en ne représentant qu'une faible quantité de matériaux neutrophages.

Dans ce but, l'invention propose notamment une grille d'espacement pour assemblage combustible nucléaire comportant une ceinture périphérique et au moins deux séries de plaquettes parallèles, les plaquettes d'une série étant obliques par rapport à celles des autres de façon que les séries délimitent des alvéoles de passage des crayons, caractérisée en ce que lesdites plaquettes parallèles son réparties en au moins deux lits espacés dans le sens longitudinal de l'assemblage.

Dans l'application de l'invention à un assemblage à réseau triangulaire, les plaquettes d'une série seront parallèles à un des côtés du réseau triangulaire, de sorte que trois séries de plaquettes seront prévues.

Dans une première réalisation, la grille est destinée au supportage des crayons : les plaquettes sont alors munies de moyens d'appui des crayons, tels que des bossages ou languettes, qui assurent le maintien d'un crayon au niveau de chaque lit en au moins deux points diamétralement opposés, les points d'appui d'un crayon dans une grille étant répartis entre plusieurs lits dans lesquels les plaquettes appartiennent à des séries différentes. En d'autres termes, les points d'appui d'un même crayon sur les plaquettes d'un lit sont décalées angulairement des appuis sur les plaquettes d'un autre lit.

Dans une autre réalisation, la grille est destinée à remplir essentiellement une fonction de mélange des filets fluides. Dans ce cas, les deux lits de la grille (ou deux lits au moins si la grille en comporte davantage) sont munis de demi-ailettes présentant des orientations différentes dans les deux nappes.

Dans une telle grille, dont la fonction essentielle est thermo-hydraulique, les plaquettes peuvent être minces et avoir une faible hauteur, comparée à celle des grilles habituelles assurant à la fois le maintien des crayons et leur centrage et des fonctions de mélange.

Grâce à la disposition des plaquettes en plusieurs lits successifs, la perte de charge est réduite par rapport à celle imposée par une grille où toutes les plaquettes sont dans le même plan, lorsque la section projetée de l'ensemble des grilles est identique. Du fait que les plaquettes de plusieurs lits portent des ailettes de mélange, ces dernières acquièrent un effet dans trois dimensions. Selon d'ailleurs le type du réseau et la disposition des ailettes, on peut réaliser différents types de mélange et d'écoulement en choisissant dans chaque cas la disposition la plus appropriée.

Dans le cas d'une grille ayant une fonction de mélange, la ceinture peut être constituée de plusieurs tronçons successifs associés chacun à un lit, tronçons reliés uniquement par des éléments longitudinaux de jonction, tels que des tiges placées dans les angles de la ceinture.

Dans une autre réalisation encore, la grille remplit tout à la fois les diverses fonctions mentionnées ci-dessus.

Les plaquettes peuvent être constituées par du feuillard plat ou, lorsqu'on souhaite assurer un meilleur maintien des grilles, ondulé au pas de répartition des crayons le long des plaquettes. Le feuillard, qu'il soit plat ou ondulé, peut comporter des bossages dirigés d'un côté et/ou de l'autre de la plaquette, vers le centre des alvéoles délimités par la plaquette.

L'invention propose également un assemblage combustible du type ci-dessus défini dont certaines des grilles au moins, destinées à supporter et à centrer les crayons, sont solidaires de tubes reliés à des pièces d'extrémité pour constituer un squelette d'assemblage. Certaines au moins des grilles présentent alors l'une des constitutions de maintien définies ci-dessus et sont reliées aux tubes du squelette par des manchons dont chacun est commun à l'ensemble des lits.

L'invention sera mieux comprise à la lecture de la description qui suit de modes particuliers d'exécution donnés à titre d'exemples non limitatifs. La description se réfère aux dessins qui l'accompagnent, dans lesquels :

- la Figure 1 est une vue partielle et schématique, en élévation, d'un assemblage pouvant être muni de grilles suivant l'invention ;
- la Figure 2 est une vue d'une grille en coupe suivant la ligne II de la Figure 5, les crayons n'étant pas représentés ;
- les Figures 3, 4 et 5 sont des vues partielles en coupe, respectivement suivant les lignes III-III, IV-IV et V-V de la Figure 2 ;
- la Figure 6 est une vue en coupe suivant un plan vertical montrant la fixation par manchon ou fourreau d'une grille sur un tube de guidage ;
- la Figure 7 est une vue de dessus du manchon de la Figure 6 ;
- les Figures 8 et 9, similaires aux Figures 6 et 7, montrent une variante de réalisation du manchon ;
- la Figure 10 est un schéma en perspective montrant une disposition possible des ailettes dans une grille de mélange à deux lits de plaquettes ;
- la Figure 11 est une vue de détail, depuis le dessus d'une grille, en coupe partielle, montrant des ailettes ménagées dans l'intérieur même des plaquettes ;
- la Figure 12 est une vue de détail en perspective montrant des demi-ailettes formées dans l'épaisseur même d'une plaquette ;
- la Figure 13 montre schématiquement l'ensemble des deux lits d'une grille mélangeuse suivant un mode particulier de réalisation ;
- la Figure 14 est un schéma en perspective, montrant une disposition possible des ailettes dans une grille à deux lits, chaque lit comportant des plaquettes orientées suivant deux directions orthogonales ;
- les Figures 15 et 16 sont des schémas montrant la superposition des plaquettes, respectivement en escalier et en créneaux, dans les deux lits d'une grille ;
- la Figure 17, similaire à la Figure 15, montre une disposition relative possible des plaquettes en escalier dans une grille à trois lits ;
- la Figure 18 est un schéma montrant la superposition des trois lits d'ailettes de la Figure 17, en vue de dessus ;
- la Figure 19 montre deux plaquettes utilisables dans une grille du genre montré en Figure 17 et équipées de languettes de solidarisation ;
- la Figure 20 est une vue de détail en perspective montrant un mode d'emboîtement possible des languettes dans une grille ;
- la Figure 21 montre, en vue de dessus, une grille définissant un réseau d'alvéoles à maille carrée, chaque aléole comportant deux ailettes opposées ;
- la Figure 22, similaire à la Figure 21, montre une répartition d'ailettes qu'on peut qualifier de réseau en tresse ;
- la Figure 22A, similaire à la Figure 22, montre un mode de reconstitution d'un réseau du type montré en Figure 21 par superposition de deux jeux de demi-ailettes appartenant chacune à un lit et ayant dans chaque lit une répartition du type réseau en tresse ;
- la Figure 23 est un schéma montrant une disposition possible des plaquettes dans une grille à trois lits délimitant un réseau à maille triangulaire ;
- la Figure 24 est une vue de dessus schématique montrant la répartition des demi-ailettes dans une grille complète comportant les trois lits montrés en Figure 23.

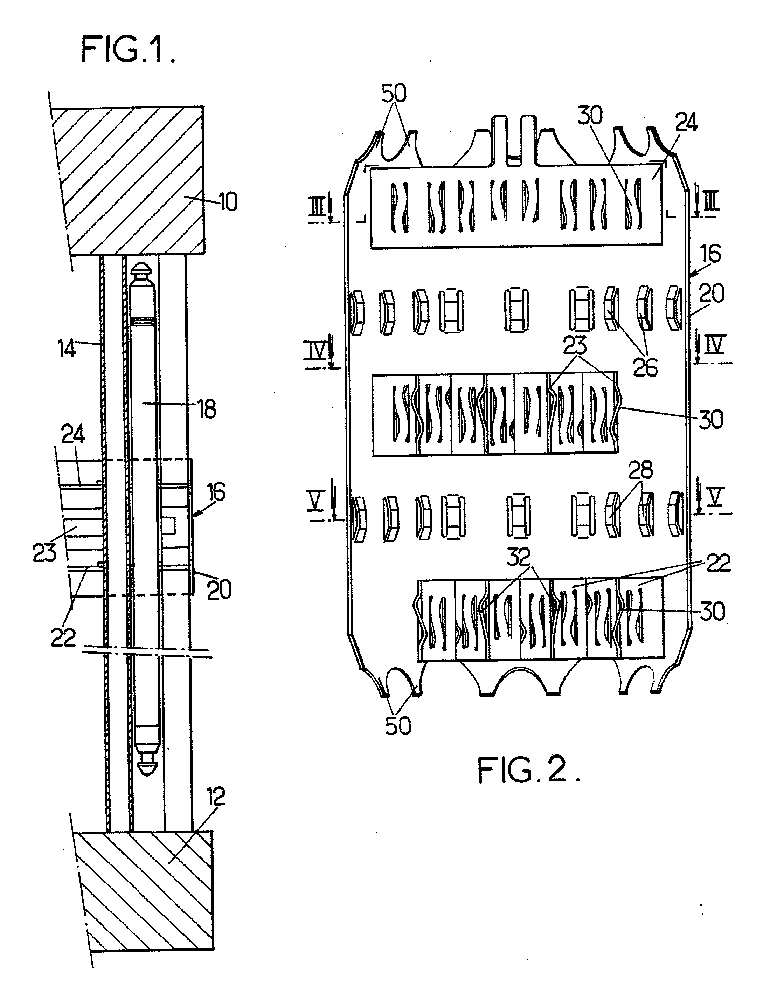

La Figure 1 montre schématiquement les seuls composants concernés par l'invention d'un assemblage de combustible nucléaire qui comporte, de façon habituelle, une pièce d'extrémité supérieure 10 et une pièce d'extrémité inférieure 12 reliées par des tubes guides 14. Sur les tubes guides 14 sont montées plusieurs grilles 16 réparties le long de l'assemblage. Certaines au moins de ces grilles sont fixées aux tubes guides 14 et maintiennent les crayons de combustible 18 selon un réseau régulier.

L'assemblage décrit à titre d'exemple a une section hexagonale et les grilles 16 maintiennent les crayons aux noeuds d'un réseau dont la maille est en forme de triangle équilatéral dont les côtés sont parallèles aux plaquettes qui constituent la ceinture 20 de la grille 16. Certains noeuds du réseau sont occupés non par des crayons 18, mais par les tubes guides 14.

Certaines au moins des grilles 16 ont la constitution montrée en Figures 2 à 5. Elles comportent chacune plusieurs lits parallèles de plaquettes de maintien et d'espacement des crayons, fixés à la ceinture 20 et décalés dans le sens longitudinal. Dans le mode de réalisation montré en Figures 2 à 5, la grille 16 a trois lits de plaquettes, perpendiculaires à l'axe longitudinal de l'assemblage. Chaque lit est constitué d'une série de plaquettes parallèles. Les plaquettes de la série constituant le lit haut 24 sont à 60° des plaquettes des séries des lits 22 et 23 et toutes les plaquettes sont fixées à la ceinture de façon classique, généralement par soudage.

Dans la réalisation montrée en Figures 2 à 5, la ceinture est constituée de feuillard plat plié et les plaquettes des trois lits sont ondulées au pas de répartition des crayons. De façon à assurer un maintien élastique de ces derniers, des moyens d'appui sont prévus sur la ceinture et sur les plaquettes. Ces moyens d'appui comprennent deux nappes de bossettes d'appui 26 et 28 prévues sur la ceinture 20, à mi-distance des lits de plaquettes (Figure 2). Ces bossettes sont formées par des crevés découpés dans le feuillard qui constitue la ceinture 20 et pliés de façon à faire saillie vers l'intérieur de la ceinture.

Les moyens d'appui comprennent encore, sur chacune des plaquettes 22, 23 et 24, des languettes élastiques de contact avec les crayons. Certaines de ces languettes, désignées par 30, présentent une forme en S de façon à coopérer avec deux crayons adjacents du réseau. D'autres, désignées par 32, ne font saillie que d'un seul côté. Elles seront notamment prévues aux emplacements où les plaquettes délimitent un alvéole destiné à recevoir non pas un crayon de combustible 18, mais un tube guide 14.

Grâce à cette disposition, chaque crayon présente un appui en quatre points au niveau de chaque lit. Les quatre appuis sont décalés angulairement de 120° lorsqu'on passe d'un lit au suivant. La ceinture et les plaquettes peuvent être constituées, de façon classique, en alliage dit "INCONEL", en acier inoxydable ou en alliage à base de zirconium.

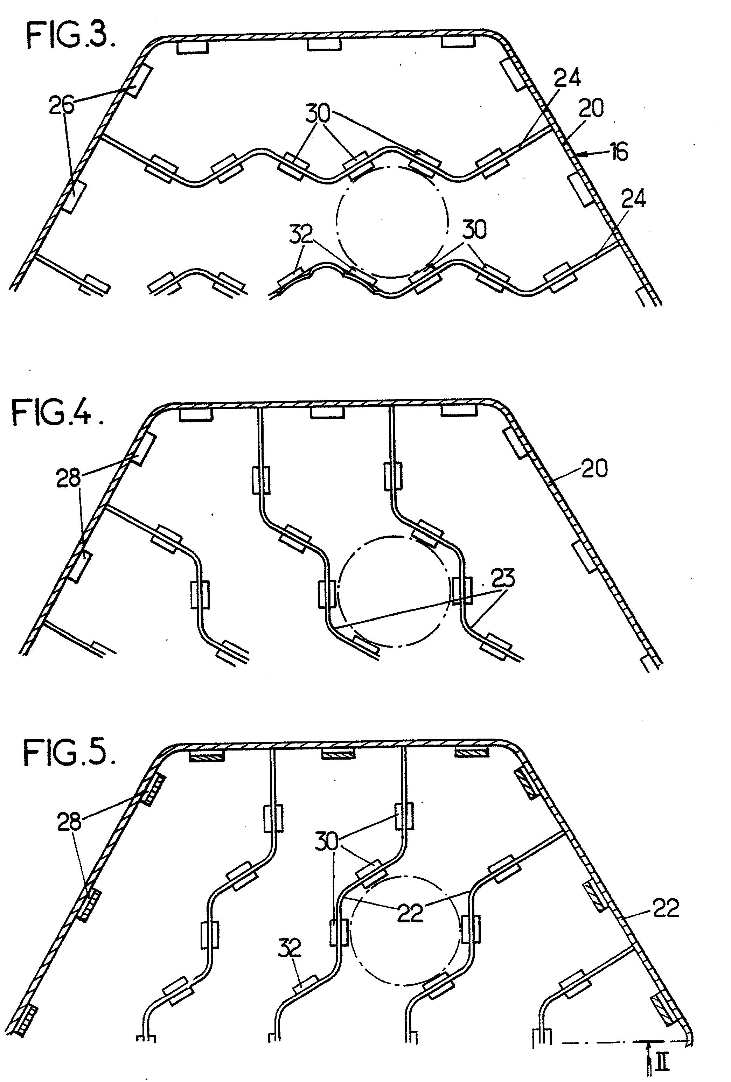

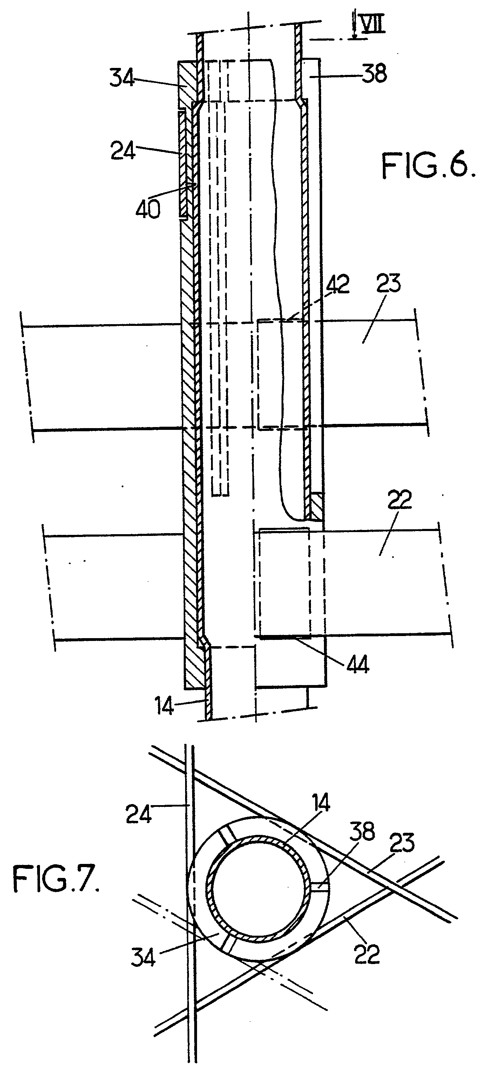

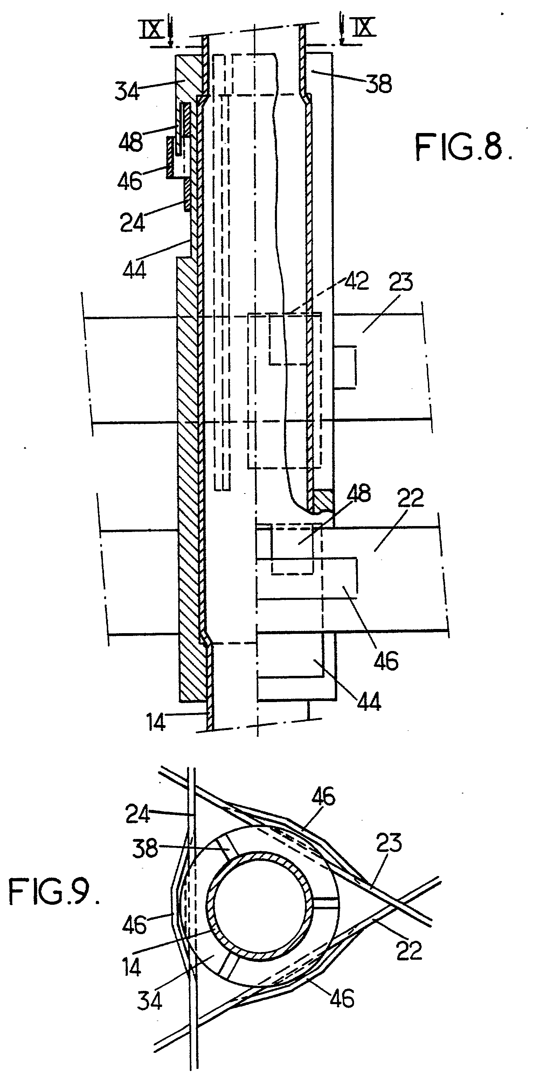

Chaque tube guide 14, tel que celui montré en traits mixtes sur les Figures 3, 4 et 5, est fixé à chacun des trois lits de la grille 16. La fixation est avantageusement assurée par l'intermédiaire d'un manchon ou d'un fourreau fendu 34, comme indiqué sur les Figures 6 et 7. Chaque fourreau 34 est fixé à un tube guide 14, à l'emplacement convenable, par emprisonnement du tube guide dans le fourreau, comme cela apparaît sur la Figure 6. La présence de la fente longitudinale 38 dans le fourreau fournit la souplesse nécessaire à l'insertion des tubes guides et au serrage. Des paires de méplats 40, 42 et 44 découpés sur le fourreau permettent de positionner et de retenir les plaquettes associées 24, 23 et 22. Ces plaquettes peuvent être soudées au fourreau 34 ou simplement positionnées. Dans cette dernière hypothèse, une variante de réalisation montrée en Figures 8 et 9 (où les organes déjà montrés sur les Figures 6 et 7 portent le même numéro de référence), les plaquettes présentent des crevés 46 destinés à emprisonner des pattes 48 découpées à cet effet dans le fourreau 34, ces crevés servant alors d'éléments de supportage de crayons.

La grille montrée en Figure 2 comporte encore des ailettes 50 ménagées sur la tranche de la ceinture et facilitant l'introduction des assemblages dans le coeur, en même temps qu'elles assurent un brassage du réfrigérant.

Dans les grilles montrées en Figures 2 à 9, les lits de plaquettes 22, 23 et 24 sont disjoints et séparés par un intervalle qui est du même ordre que la hauteur des plaquettes. Mais il serait également possible d'utiliser des lits jointifs, les plaquettes d'un lit étant en contact avec celles du lit adjacent, ou au contraire d'augmenter l'intervalle entre lits.

Les plaquettes peuvent de plus être munies d'ailettes de mélange, de façon à assurer tout à la fois une fonction de supportage et une fonction de mélange des filets fluides. Ces ailettes peuvent avoir l'une des constitutions qui seront maintenant décrites, dans leur application à des grilles ayant une fonction de mélange.

Ces grilles mélangeuses peuvent être alternées avec des grilles supports dans un même assemblage combustible.

Les grilles mélangeuses doivent réaliser le meilleur compromis possible entre des exigences dans une certaine mesure contradictoires. Leur absorption neutronique doit être aussi faible que possible, ce qui conduit à réduire le plus possible la masse de matériau qui les constitue et à choisir, dans la mesure du possible, un matériau à faible section de capture tel qu'un alliage à base de zirconium. Les ailettes mélangeuses doivent homogénéiser l'écoulement et réduire les écarts de température en provoquant une redistribution transverse des filets de réfrigérant. Mais il faut éviter que la présence des ailettes ne provoque un accroissement de perte de charge tel qu'il y ait réduction inacceptable du débit.

La répartition des plaquettes en plusieurs lits décalés dans le sens axial permet de diminuer la perte de charge. Lorsque les plaquettes sont munies d'ailettes, ces dernières peuvent être réparties axialement entre les lits pour obtenir un effet à trois dimensions. On décrira maintenant plusieurs types exemples avec des répartitions avantageuses, conduisant à des modes d'écoulement différents, dont certaines sont particulièrement adaptées à une maille triangulaire et d'autres à une maille carrée.

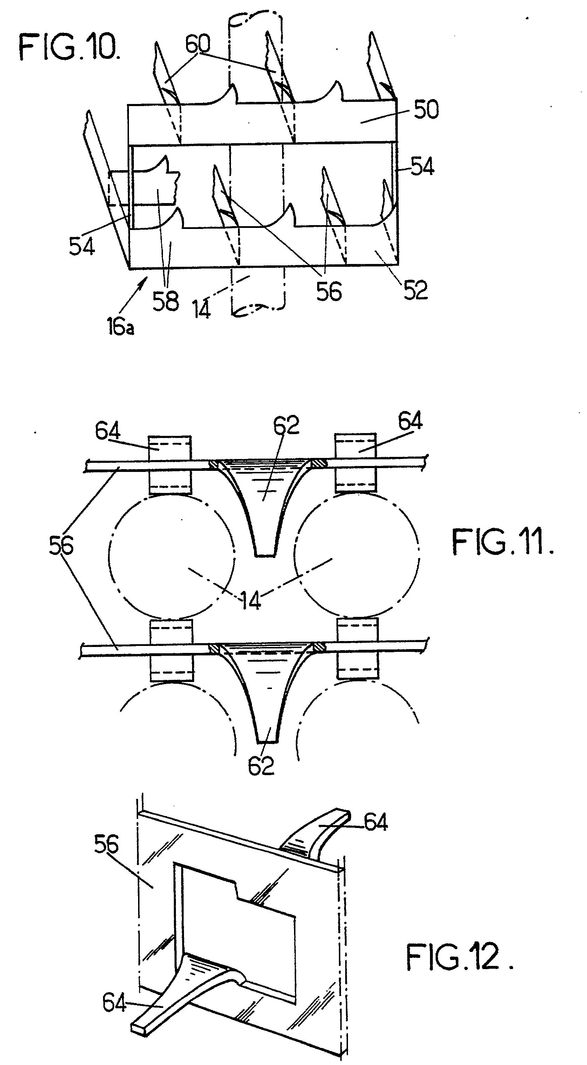

A titre de premier exemple de grille mélangeuse, la Figure 10 montre un réseau de 5 x 5 alvéoles de réception de crayons 18. La grille 16a dont une fraction est représentée comprend deux lits espacés 50 et 52. Les lits sont reliés par des tiges ou barrettes d'angle 54. Chaque lit comprend des plaquettes orientées suivant deux directions différentes mais chaque lit est incomplet en ce sens qu'un alvéole n'est complètement délimité que par des plaquettes appartenant aux deux lits. On voit par exemple que le lit 52 comporte des plaquettes 56 orientées dans une première direction et des plaquettes 58 orientées dans la direction perpendiculaire. La série de plaquettes ayant la première direction est complétée par des plaquettes 60, disposées en quinconce avec les premières, mais appartenant au lit 50. Les plaquettes 56, 58, 60 comprennent des moyens de mélange des filets fluides. Ces moyens sont constitués de demi-ailettes placées chacune sur un seul alvéole élémentaire et disposées par couples opposés aux angles des alvéoles.

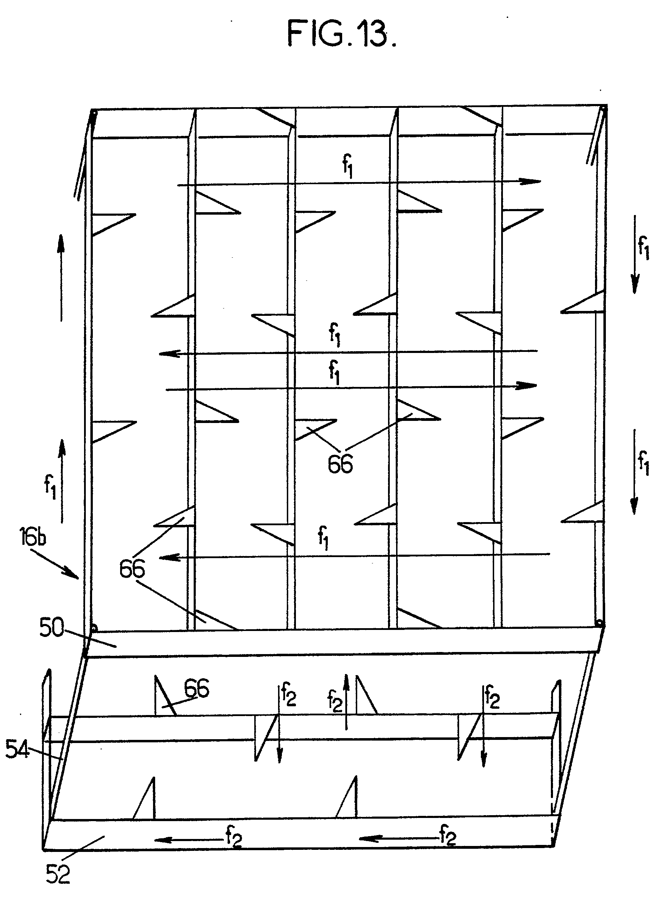

Dans la variante de réalisation montrée en Figure 11, les plaquettes 56 comportent au contraire des ailettes complètes 62 découpées dans une fenêtre non débouchante des plaquettes. La Figure 11 montre également des doigts de centrage 64 qui peuvent avoir une constitution similaire à celle montrée en Figure 2.

Dans une autre variante encore de réalisation, montrée en Figure 12, deux demi-ailettes 64 opposées sont ménagées par découpe et déformation dans chaque fenêtre d'une plaquette 56.

La Figure 13 montre une répartition avantageuse des demi-ailettes 66 dans le cas d'une grille 16b comportant deux lits 50 et 52, chaque lit étant formé d'une série de plaquettes ayant toutes la même direction, les plaquettes d'une série étant orthogonales aux plaquettes de l'autre série. Les demi-ailettes 66 portées par une même plaquette sont réparties à intervalles réguliers, égaux à la dimension d'un alvéole, et alternativement dirigés dans un sens et dans l'autre. La projection sur un même plan des deux jeux d'ailettes conduit à un réseau complet d'ailettes orthogonales. Mais, contrairement à ce qui se passerait si toutes les plaquettes étaient dans le même plan, chaque réseau d'ailettes provoque un mode d'écoulement transverse propre. Ce mode d'écoulement est schématisé par les flèches f1 pour ce qui est du lit 50, f2 pour ce qui est du lit 52. Au passage du premier lit, les entrefers de même direction sont balayés dans un sens donné par le réfrigérant. Au passage du second lit, ce sont les entrefers de direction perpendiculaire qui sont à leur tour balayés.

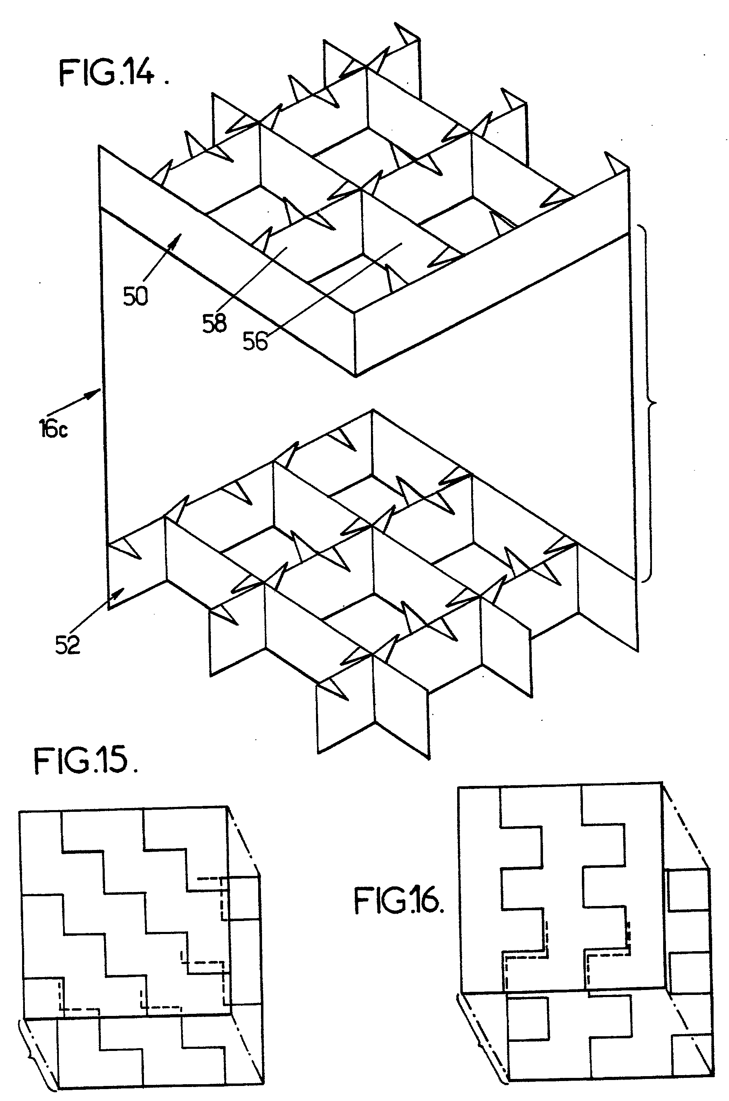

Dans la variante de réalisation montrée en Figure 14, chacun des deux lits 50 et 52 de la grille 16c comportent la moitié des ailettes appartenant à une série d'ailettes parallèles à une première direction et une autre moitié d'ailettes de la série dirigée suivant la direction orthogonale. En d'autres termes, dans une série donnée, chaque plaquette appartient alternativement au lit supérieur et au lit inférieur.

Dans un lit donné, les plaquettes appartenant à une série (plaquettes 56 par exemple) portent deux demi-ailettes à chaque intersection avec les plaquettes 58 de l'autre série, les deux demi-ailettes étant de sens contraire. Et les plaquettes 58 du même lit portent deux demi-ailettes au milieu de l'espace qui s'étend entre deux points de croisement.

En projection axiale, la superposition des deux réseaux d'ailettes conduit encore à un réseau complet d'ailettes opposées. Mais, si toutes les ailettes étaient dans le même plan, elles génèreraient autour de chaque crayon un courant circonférentiel de réfrigérant. Au contraire, dans la grille suivant la Figure 14, les deux demi-ailettes qui, autour d'un crayon déterminé, provoquent la circulation de réfrigérant autour du crayon, sont situées à des cotes axiales différentes et favorisent l'apparition d'un courant hélicoïdal plus favorable du point de vue du mélange.

Les plaquettes peuvent comporter, au lieu des plaquettes droites des Figures 13 et 14, des plaquettes pliées en forme d'escalier ou de créneaux. Les Figures 15 et 16 montrent schématiquement deux dispositions possibles des plaquettes dans une grille à deux lits, chaque plaquette ayant une forme en escalier (Figure 15) ou en créneaux (Figure 16). D'autres combinaisons encore sont possibles, à deux ou trois lits superposés.

Dans une autre variante encore de réalisation, les lits sont jointifs et certaines des plaquettes de chaque lit présentent des pattes d'entrecroisement avec les autres lits. Cette solution présente l'avantage d'assurer une bonne tenue mécanique et de faciliter la répartition des ailettes, notamment dans le cas d'un réseau à maille rectangulaire.

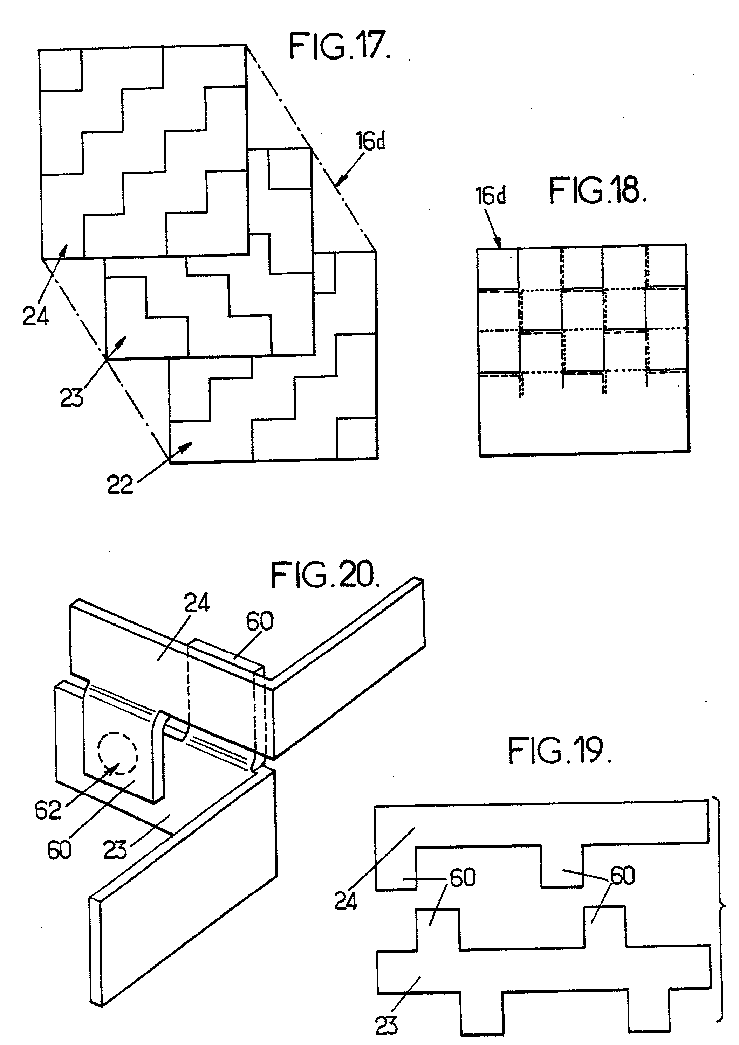

Les Figures 17 à 20 montrent une constitution possible de grille à trois lits, les plaquettes de chaque lit 22, 23 et 24 étant pliées en escalier. On voit que la disposition des plaquettes est telle que, en projection, elles délimitent complètement les alvéoles : la Figure 18 est une telle vue en plan des trois lits d'une grille, montrant la superposition des plaquettes de trois lits, représentées pour plus de clarté respectivement en traits pleins, en tirets et en pointillés. Certaines parois d'alvéole comportent des tronçons de grille placés l'un au-dessus de l'autre. La solidarisation des lits entre eux peut alors être réalisée de façon simple en munissant les plaquettes, dans les tronçons en coïncidence, de pattes de solidarisation 60 (Figure 19). Ces pattes peuvent être emboîtées, comme indiqué schématiquement sur la Figure 20. Une autre solution consiste à former, dans certaines des pattes, des boutons tels que 62 venant s'engager dans des creux des plaquettes associées. On peut alors diminuer le nombre des pattes. Une autre solution enfin consiste à réaliser une fixation par rivets ou points de soudure. Les rivets peuvent également constituer des centreurs pour les crayons.

Une grille ainsi constituée présente l'avantage d'une bonne tenue mécanique et d'une fabrication simple, surtout lorsqu'elle utilise des rivets centreurs. La disposition des plaquettes dans deux directions perpendiculaires introduit des hétérogénéités favorables au mélange. Enfin, les ailettes peuvent être disposées à la fois sur la nappe supérieure et sur la nappe inférieure.

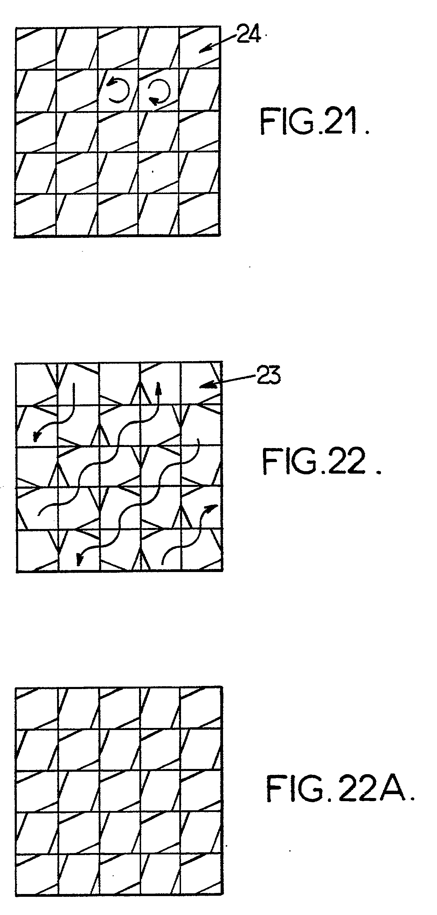

Lorsque la grille comporte trois lits de plaquettes, il est possible de répartir les ailettes de mélange de façon différente dans les trois lits. En particulier, une grille à trois lits peut être prévue pour reconstituer par superposition une disposition de demi-ailettes du genre montré en Figure 21 ou la répartition d'ailettes montrée en Figure 22 qu'on peut qualifier de "réseau en tresse" et qui crée des circulations diagonales et opposées dans les entrefers entre crayons. Pour cela on peut prévoir :

- un lit de plaquettes supérieur 24 présentant un réseau en tresse de demi-ailettes organisant la circulation dans un premier sens ;
- un lit d'ailettes médian 23 portant des ailettes suivant une disposition également en tresse, mais de direction opposée ;
- une nappe inférieure ne portant pas d'ailettes, mais seulement des pattes permettant de la fixer aux lits supérieur et médian pour créer une grille mécaniquement rigide.

Chaque cellule contenant un crayon est alors munie de deux demi-ailettes, appartenant, l'une au lit supérieur, l'autre au lit médian, qui tend à faire tourner le réfrigérant en spirale autour du crayon dans un sens qui change lorsqu'on passe d'une cellule à la cellule voisine. Grâce à cette combinaison de deux réseaux en tresse, on retrouve les effets du réseau de la Figure 21, mais à l'aide d'ailettes placées dans deux plans décalés dans le sens général de circulation et dont la répartition relative est montrée en Figure 22A.

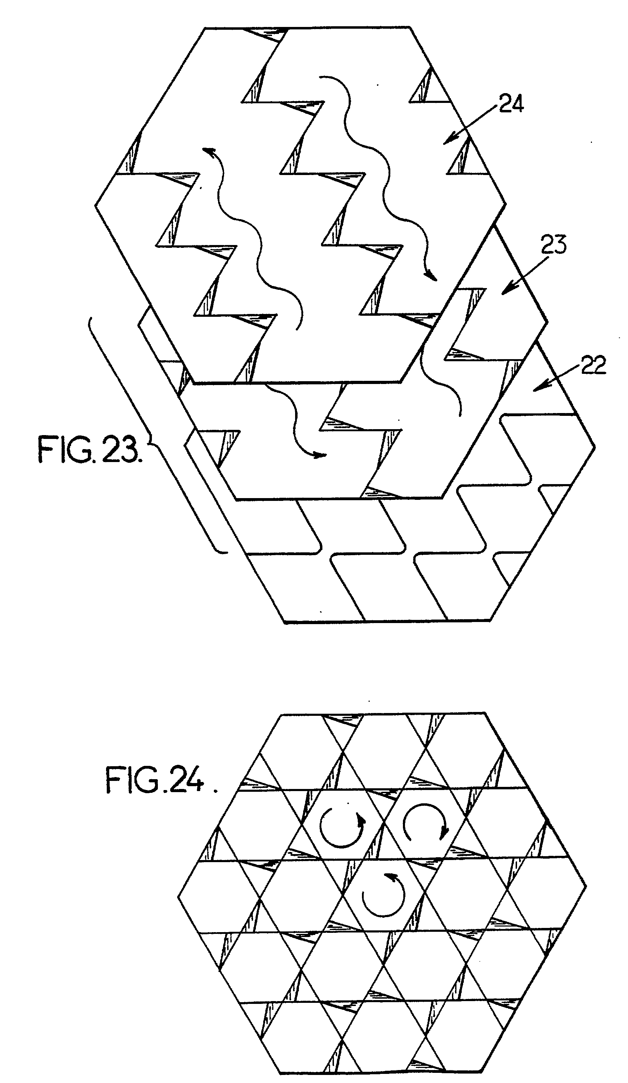

La conception qui vient d'être exposée dans le cas d'un réseau carré est directement transposable au cas d'un réseau triangulaire. Les plaquettes sont alors pliées à 60° et non plus à 90° et le lit inférieur est complet afin de délimiter un triangle de plaquettes autour de chaque crayon et non pas un losange. Grâce à cette disposition, l'élément d'appui porté par la plaquette peut être perpendiculaire à chaque crayon. Les plaquettes du lit inférieur peuvent être munies de pattes de fixation sur les lits supérieur et médian. Les Figures 23 et 24 montrent respectivement une constitution possible des trois lits et la disposition d'ailettes obtenue par superposition de ces trois lits.

On constate de façon générale que l'invention permet de disposer d'une grande souplesse de réalisation et de faire choix de la solution la plus avantageuse dans chaque cas. Les plaquettes peuvent être droites ou pliées en escalier ou en créneaux ; les lits peuvent être non jointifs ; les ailettes peuvent être prévues sur un ou plusieurs lits pour assurer une fonction de mélange. Les ailettes peuvent être découpées dans les plaquettes elles-mêmes et être mises au niveau des entrefers entre crayons du fait de l'absence de croisement de plaquettes au même niveau. Les plaquettes peuvent avoir une forme ajourée ou crénelée. Enfin, il est possible d'entretoiser les lits pour assurer une bonne tenue mécanique, éventuellement par des moyens qui participent également au centrage des crayons.

**Revendications**

1. Grille d'espacement pour assemblage combustible nucléaire comportant une ceinture périphérique et au moins deux séries de plaquettes parallèles, les plaquettes d'une série étant obliques par rapport à celles des autres de façon que les séries délimitent des alvéoles de passage de crayons (18), caractérisée en ce que lesdites plaquettes parallèles sont réparties en au moins deux lits (22, 23, 24) espacés dans le sens longitudinal de l'assemblage.

2. Grille selon la revendication 1 pour assemblage à réseau triangulaire, caractérisée en ce que les plaquettes d'une série sont parallèles à un des côtés du réseau triangulaire et en ce que trois séries de plaquettes sont prévues.

3. Grille selon la revendication 1 ou 2 de supportage des crayons, caractérisée en ce que les plaquettes sont munies de moyens d'appui des crayons, tels que des bossages ou languettes (30, 32), qui assurent le maintien d'un crayon au niveau de chaque lit en au moins deux points diamétralement opposés, les points d'appui d'un crayon dans une grille étant répartis entre plusieurs lits dans lesquels les plaquettes appartiennent à des séries différentes.

4. Grille selon la revendication 1, 2 ou 3, caractérisée en ce que chaque crayon est supporté circonférentiellement sur au moins trois génératrices, par contact avec des moyens d'appui prévus sur chaque plaquette, à trois niveaux différents.

5. Grille selon la revendication 1, 2 ou 3, caractérisée en ce que chaque crayon est supporté circonférentiellement en au moins deux points de chaque lit constitué de plaquettes de directions parallèles.

6. Grille selon la revendication 1, 2 ou 3, caractérisée en ce que chaque crayon est supporté par un ensemble de points répartis circonférentiellement et définis par le contact élastique des plaquettes de direction parallèle de chaque lit, en trois niveaux différents.

7. Grille mélangeuse selon la revendication 1, 2 ou 3, caractérisée en ce que deux lits au moins de la grille sont munis de demi-ailettes présentant des orientations différentes dans les deux nappes.

8. Grille selon la revendication 7, caractérisée en ce que la ceinture est constituée de plusieurs tronçons successifs associés chacun à un lit, tronçons reliés uniquement par des éléments longitudinaux de jonction (54), tels que des tiges placées dans les angles de la ceinture.

9. Grille selon l'une quelconque des revendications précédentes, caractérisée en ce que les plaquettes sont en feuillard plat ou ondulé au pas de répartition des crayons le long des plaquettes.

10. Grille selon la revendication 9, caractérisée en ce que le feuillard comporte des bossages dirigés d;un côté et/ou de l'autre de la plaquette, vers le centre des alvéoles délimités par la plaquette.

11. Grille selon l'une quelconque des revendications précédentes, caractérisée en ce que deux lits successifs sont jointifs et en ce que les plaquettes de ces deux lits sont entrelacées.

12. Grille selon la revendication 7 ou 8, caractérisée en ce que les demi-ailettes sont situées sur au moins un des bords de la plaquette ou conformées dans la plaquette par découpage.

13. Assemblage combustible comprenant deux pièces d'extrémité reliées par des tubes guides portant des grilles réparties le long de ces tubes caractérisé en ce que certaines au moins desdites grilles sont conformes à l'une quelconque des revendications précédentes.

14. Assemblage selon la revendication 13, caractérisé en ce que chacun desdits tubes est relié à certaines au moins des grilles par des fourreaux (34) chacun solidarisé de façon permanente du tube et emprisonnant les plaquettes (22, 23, 24) délimitant l'alvéole de grille qu'il traverse.

**Claims**

1. Spacing grid for a nuclear fuel assembly, including a peripheral girdle and at least two sets of mutually parallel plates, the plates of one set being oblique with respect to those of the other sets so that the sets define pockets for the fuel rods (18), characterized in that said parallel plates are distributed in at least two beds (22, 23, 24) spaced apart in the longitudinal direction of the assembly.

2. Grid according to claim 1 for an assembly having a triangular array, characterized in that the plates of one set are parallel to one of the sides of the triangular array and in that three sets of plates are provided.

3. Grid according to claim 1 or 2, for supporting the rods, characterized in that the plates are provided with means for supporting the rods, such as bosses or tongues (30, 32), which hold a rod in position at the level of each bed at at least two diametrically opposite points, the support points of a rod in a grid being distributed between several beds in which the plates belong to different sets.

4. Grid according to claim 1, 2 or 3, characterized in that each rod is supported circumferentially along at least three generatrices, by engagement with support means provided on each plate, at three different levels.

5. Grid according to claim 1, 2 or 3, characterized in that each rod is supported circumferentially at at least two points of each bed formed of plates of parallel directions.

6. Grid according to claim 1, 2 or 3, characterized in that each rod is supported at a plurality of points distributed circumferentially and defined by resilient engagement of the plates of parallel directions of each bed, at three different levels.

7. Mixing grid according to claim 1, 2 or 3, characterized in that two beds at least of the grid are provided with half-fins having different orientations in the two layers.

8. Grid according to claim 7, characterized in that the girdle is formed of a plurality of successive sections each associated with a bed, which sections are joined together solely by longitudinal junction elements (54) such as rods placed in the angles of the girdle.

9. Grid according to any one of the preceding claims, characterized in that the plates are made from strip metal which is flat or is corrugated at the distribution pitch of the rods along the plates.

10. Grid according to claim 9, characterized in that the strip metal is formed with bosses directed from one side and/or from the other side of the plate, towards the center of the pockets defined by the plate.

11. Grid according to any one of the preceding claims, characterized in that two successive beds are jointing and in that the plates of these two beds are intermeshed.

12. Grid according to claim 7 or 8, characterized in that the half-fins are situated on at least one of the edges of the plate or are formed in the plate by stamping.

13. Fuel assembly including two end pieces connected together by guide tubes carrying grids distributed along said tubes, characterized in that some at least of said grids are in accordance with any one of the preceding claims.

14. Assembly according to claim 13, characterized in that each of said tubes is connected to some at least of the grids by sleeves (34) each permanently securely connected to the tube and retaining the plates (22, 23, 24) defining the grid pocket through which it projects.

**Patentansprüche**

1. Beabstandungsgitter für Brennelementkassetten mit einem äußeren Gürtel und mindestens zwei Reihen paralleler Platten, wobei die Platten einer Reihe schräg bezüglich der Platten der anderen Reihen derart angeordnet sind, daß die Reihen Durchgangsöffnungen für Brennstäbe (18) umschließen, dadurch gekennzeichnet, daß die parallelen Platten in mindestens zwei in Längsrichtung der Brennelementkassette beabstandeten Schichten (22, 23, 24) angeordnet sind.

2. Beabstandungsgitter nach Anspruch 1 für Brennelementkassetten mit einem triangulären Gitter, dadurch gekennzeichnet, daß die Platten einer Reihe parallel zu einer der Seiten des triangulären Gitters sind und daß drei Plattenreihen vorgesehen sind.

3. Beabstandungsgitter nach Anspruch 1 oder 2, zur Halterung von Stäben, dadurch gekennzeichnet, daß die Platten mit Klemmorganen für die Stäbe wie Ausbuchtungen oder Zungen (30, 32) versehen sind, die die Halterung der Stäbe in jeder Schicht an mindestens zwei sich diametral gegenüberliegenden Punkten gewährleisten, wobei die Andruckpunkte eines Stabs in einem Gitter auf mehrere Schichten in einem Gitter verteilt sind, wobei die Platten verschiedenen Reihen angehören.

4. Beabstandungsgitter nach Anspruch 1, 2 oder 3, dadurch gekennzeichnet, daß jeder Stab an seinem Umfang an mindestens drei Erzeugenden gehaltert wird durch den Kontakt mit den Klemmorganen, die auf jeder Platte vorgesehen sind, wobei die Andruckpunkte in drei verschiedenen Ebenen liegen.

5. Beabstandungsgitter nach Anspruch 1, 2 oder 3, dadurch gekennzeichnet, daß jeder Stab an seinem Umfang an zwei Punkten einer jeden Schicht gehaltert wird, die aus Platten zueinander paralleler Orientierung gebildet sind.

6. Beabstandungsgitter nach Anspruch 1, 2 oder 3, dadurch gekennzeichnet, daß jeder Stab durch eine Gruppe von Punkten gehaltert wird, die über seinen Umfang verteilt sind und durch den elastischen Kontakt der zueinander parallelen Platten jeder Schicht in drei verschiedenen Ebenen definiert sind.

7. Beabstandungsgitter nach einem der Ansprüche 1, 2 oder 3, dadurch gekennzeichnet, daß mindestens zwei Schichten des Gitters mit Halbstegen versehen sind, die in den beiden Schichten unterschiedliche Ausrichtungen aufweisen.

8. Beabstandungsgitter nach Anspruch 7, dadurch gekennzeichnet, daß der Gürtel aus mehreren aufeinanderfolgenden Abschnitten besteht, die jeder zu einer Schicht zugehören, wobei die Abschnitte ausschließlich über longitudinale Verbindungselemente (54), wie z.B. in den Kanten des Gürtels angeordnete Stangen, bestehen.

9. Beabstandungsgitter nach einem der vorstehenden Ansprüche, dadurch gekennzeichnet, daß die Platten aus flachem Bandmaterial bestehen oder aus gemäß der Verteilung der Stangen entlang der Platten gewelltem Bandmaterial.

10. Beabstandungsgitter nach Anspruch 9, dadurch gekennzeichnet, daß das Bandmaterial Ausbuchtungen aufweist, die zu einer Seite hin und/oder zur anderen Seite der Platte zur Mitte der durch die Platten eingegrenzten Öffnungen bzw. Gittermaschen orientiert sind.

11. Beabstandungsgitter nach einem der vorstehenden Ansprüche, dadurch gekennzeichnet, daß zwei aufeinanderfolgende Schichten miteinander verbunden sind und die Platten der beiden Schichten ineinander verschachtelt sind.

12. Beabstandungsgitter nach Anspruch 7 oder 8, dadurch gekennzeichnet, daß die Halbstege mindestens auf einem der Ränder der Platte angebracht oder durch Schneiden aus der Platte herausgearbeitet sind.

13. Brennelementkassette mit zwei durch Führungsrohre verbundenen Enden, wobei die Führungsrohre Beabstandungsgitter tragen, die entlang dieser Rohre angeordnet sind, dadurch gekennzeichnet, daß mindestens bestimmte Gitter gemäß den vorstehenden Ansprüchen ausgeformt sind.

14. Brennelementkassette nach Anspruch 13, dadurch gekennzeichnet, daß jedes Rohr an mindestens bestimmte Gitter über Hülsen (34) verbunden ist, die bleibend an dem Rohr befestigt sind und die Platten (22, 23, 24) einschließen, die die Gittermasche begrenzen, die das Rohr durchquert.

FIG.1.

FIG.2.

FIG.3.

26

30

32

24

20

16

30

24

FIG.4.

28

20

23

FIG.5.

28

30

32

22

22

II

34

38

24

40

42 23

22

14 44

FIG.6.

FIG.7.

24

14

38 23

34 22

FIG.8.

FIG.9.

FIG.10.

FIG.11.

FIG.12.

## FIG.13.

FIG.14.

50

58

56

16c

52

FIG.15.

FIG.16.

FIG.17.

FIG.18.

FIG.20.

FIG.19.

FIG.21.

FIG.22.

FIG.22A.

FIG.23.

24

23

22

FIG.24.